Europäisches Patentamt

European Patent Office

Office européen des brevets

(19)

(11) **EP 1 396 425 A1**

(12) **EUROPEAN PATENT APPLICATION**

(43) Date of publication:
**10.03.2004 Bulletin 2004/11**

(51) Int Cl.[7]: **B64D 15/20**, G08B 19/02

(21) Application number: **03290582.0**

(22) Date of filing: **10.03.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Auxitrol SA
18000 Bourges (FR)**

(72) Inventors:
• **Bernard, Marc
18000 Bourges (FR)**

• **Barre, Cyril
36100 Issoudun (FR)**
• **Lapeyronnie, David
18340 Levet (FR)**

(74) Representative:
**Callon de Lamarck, Jean-Robert et al
Cabinet Régimbeau
20, rue de Chazelles
75847 Paris cedex 17 (FR)**

(54) **Large spectrum icing conditions detector**

(57)     The invention proposes an ice detector (12) for detecting ice accretion on the surface of a structure subject to icing, said ice detector comprising a sensing element (7a) protruding into the airflow and supported relatively to a surface of said object by a strut (8) upon which it is mounted, characterized in that said sensing element has an evolutionary profile along the longitudinal axis adapted to the spectral distribution of the icing conditions. Said sensing element is adapted to the profile of ice distribution on the aircraft and allows detection on a large spectrum of droplet sizes.

*Figure 10d*

EP 1 396 425 A1

## Description

## BACKGROUND OF THE INVENTION

Technical field

The invention relates to an ice detector and more particularly to an intrusive ice detector utilized to provide, whatever the spectrum of Liquid Water Droplet diameter, an accurate warning of ice accretion on the critical surfaces of an aircraft.

Background art

An ice detector is a sensor commonly used on aircraft to indicate the presence of icing conditions in the airflow that may result in ice accretion on the critical surfaces of the aircraft. Ice accretion on the aircraft parts like wings or engine intake degrades its aerodynamic performances and increases its mass. Consequently, the aircraft can become difficult to control, and in the worst case, it can crash.

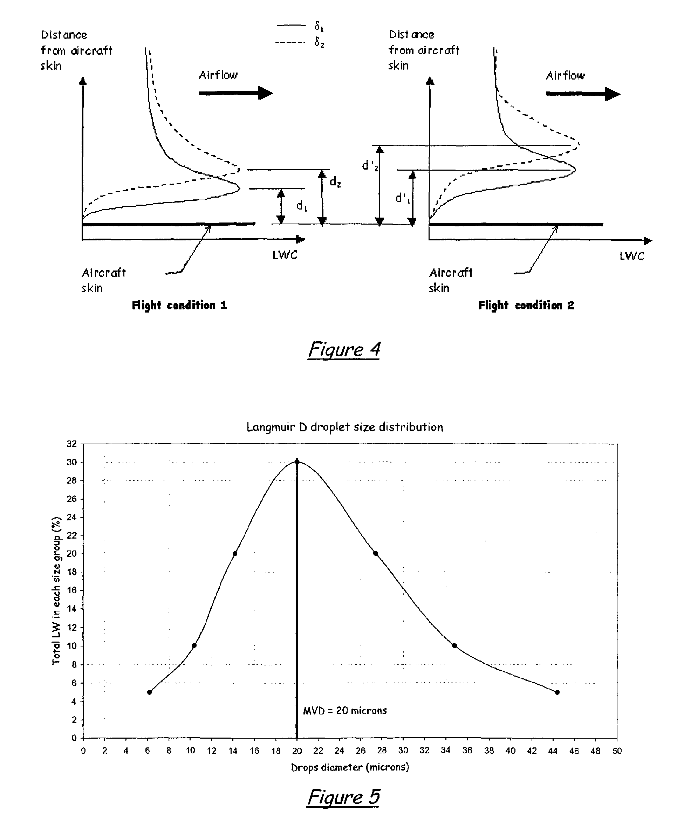

Ice accretion occurs when the aircraft is flying through clouds that contains liquid water droplets at a temperature below the freezing limit. These droplets are called "supercooled droplets" and have a typical Median Volume Diameter (MVD) of 20μm (see Langmuir D distribution on figure 5). Droplets having a diameter superior to 50μm are also encountered (Supercooled Large Droplets).

The ice detector is classically positioned perpendicularly to the skin of the aircraft at a known location that is selected to provide fast and accurate detection of ice accretion.

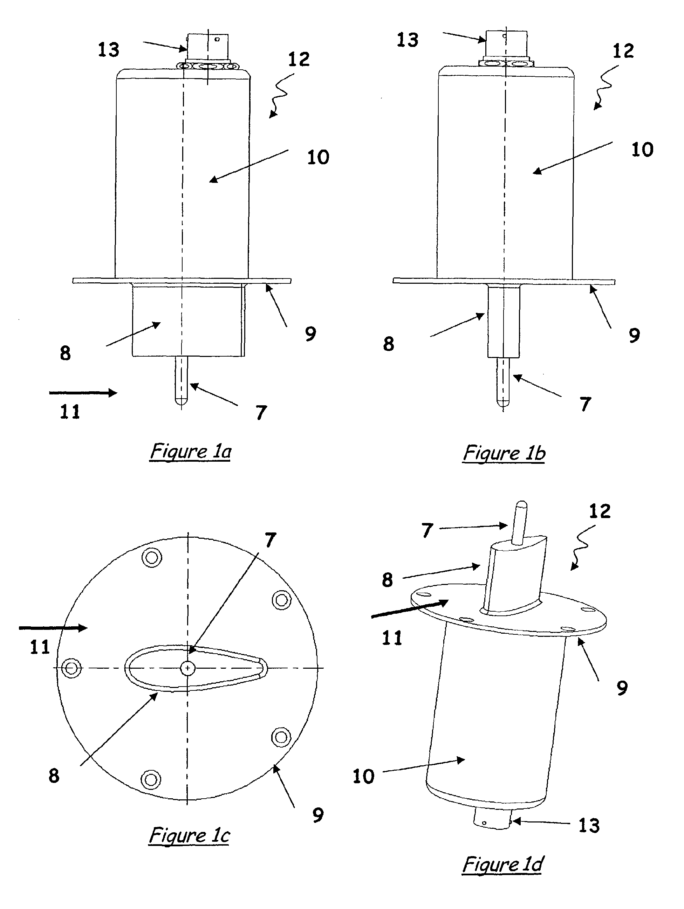

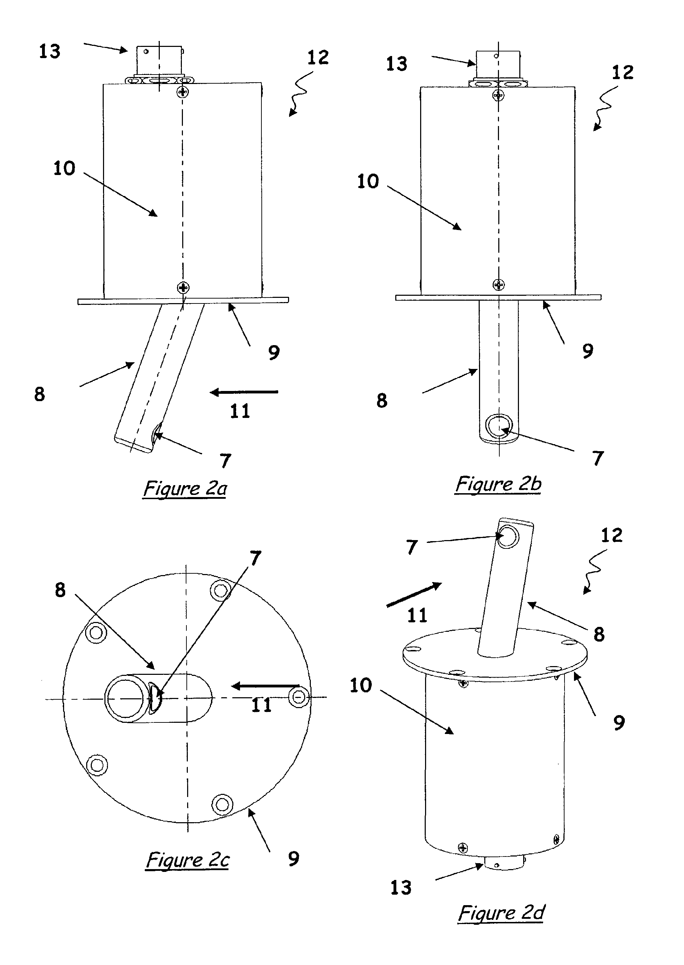

Referring to figure 1a to figure 3, said conventional ice detector 12 is constituted by an airfoil-shaped strut 8 and a sensing element 7 mounted upon said strut 8. The sensing element 7 is classically a magnetostrictive (figure 1a to figure 1d) or piezoelectric (figure 2a to figure 2d) oscillating probe (see U.S. Pat. Nos. 4,553,137; 4,570,881) which frequency oscillation is comprised between 20000 to 45000Hz. When ice accretes on the sensing element 7, mass of said sensing element 7 increases and consequently oscillation frequency decreases down to the detection threshold. The strut 8 extends from a mounting flange 9 to the sensing element 7 and allows measuring outside the boundary layer adjacent to aircraft skin. Ice detector 12 is fixed on the aircraft skin via the flange 9 with means such as bolts or screws. A housing 10 extends inside the aircraft, said housing 10 comprising electronic modules and a connector 13 for connecting said ice detector 10 to the aircraft control systems.

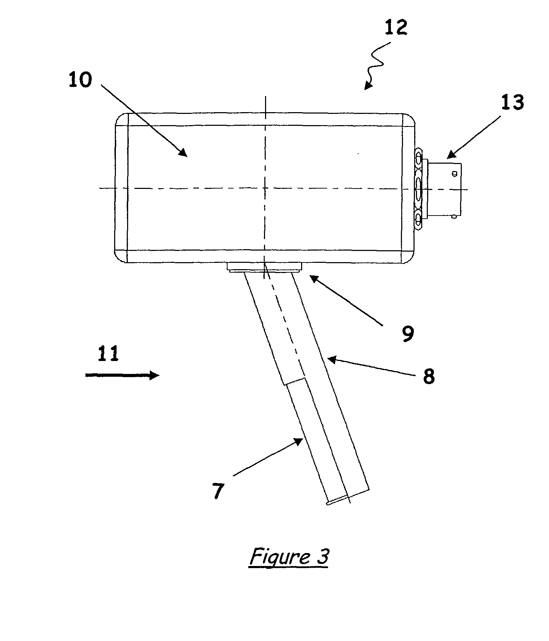

Classically, said sensing element 7 and said strut 8 extends in the airflow perpendicularly to the aircraft skin. In a particular configuration, as illustrated by figure 2a and figure 3, they are sloped from the vertical line relative to the aircraft skin in the direction of the airflow represented by the arrow 11. Said slope is generally included between 5° and 30° (see U.S. Pat. Nos. 4,333,004; 6,320,511) and is intended to decrease the equilibrium temperature (recovery effect), especially for improvement of detection at temperature near freezing point, and to facilitate the elimination of ice during the de-icing, by allowing said ice to slide on the surface of said sensing element 7.

Prior art's sensing element 7 has a circular cross section with a constant diameter spanwise. Classically, the efficient measurement length is quite short (around 20mm). The strut length is adapted to position the sensing element at the characteristic nominal icing condition point.

However conventional ice detectors, as described herein, present several technical limitations, some of said limitations being exposed afterwards.

Non homogeneous distribution of the icing conditions

An aircraft in flight generates in its close environment a modification of the aerodynamic field (local pressure and velocity). Hence, any sensor positioned on the aircraft skin is subject to this modification and the measure made by said sensor is then altered by a more or less important variation. To take into account this modification, a correction operation is generally realized on the result of the measure through the use of a pre-established coefficient, which allows obtaining the real value from the read value.

Within the framework of ice accretion detection, said correction operation (installation coefficient) is particularly difficult. Indeed, due to their momentum, water droplets do not exactly follow the streamlines of the airflow and are more or less deviated by the presence of the aircraft. Consequently, there are some areas close to the aircraft where local water droplet concentration is superior to the upstream conditions. Figure 4 represents the concentration profile for two given sizes of droplets versus distance from aircraft skin for two flight conditions. The distance of the maximum concentration (respectively $d_1$ and $d_2$) is then a function of the droplet size (respectively $\delta_1$ and $\delta_2$) and flight conditions (velocity, static temperature, altitude, angle of attack, side slip, etc.). Therefore the distribution of the local icing conditions is non-homogeneous.

According to the aircraft type, the position of the maximum concentration may vary by several centimeters ($d'_1$ and $d'_2$) along the aircraft orthogonal axis, depending on the diameter of the droplets encountered and the flight conditions.

Consequently, the prior art ice detectors are adapted to the detection of average icing conditions (described on JAR-FAR and EUROCAE standards), because the measure is focused at a fixed distance from the aircraft skin, but cannot integrate accurately all the icing conditions spectrum that can be crossed.

Slow accretion of small drops

One of the most difficult icing conditions to detect corresponds to the slow accretion of small drops, which have typically a diameter lower than 10 microns. Said small drops are indeed particularly sensitive to evaporation. Due to the aerodynamics of an aircraft, said evaporation is more sensitive on the leading edges, such as the surface of the sensing element of the ice detector, where the local temperature is closed to the total temperature of the flow, than on flat surfaces such as the wing extrados. On the surface of the sensitive element, said small drops tend to evaporate as they accrete.

Hence there is a risk that the quantity of ice present on the sensing element is not representative of the thickness of ice present on the other surfaces of the aircraft where evaporation phenomenon is less active. A delayed detection or even no detection of nevertheless real icing conditions could then occur.

Effect of supercooled large droplets (SLD) on ice accretion

Ice accretion on the sensing element is in particular function of the Velocity of the droplets ($V_\infty$), the Liquid Water Content (LWC) of the airflow, the collection Efficiency (E) and the freezing fraction ($\eta$).

The collection efficiency E characterizes the proportion of liquid mass crossing the frontal projection of the sensing element and ultimately striking the sensing element. E parameter depends in particular on velocity $V_\infty$, sensing element diameter (D) and droplet size ($\delta$).

The freezing fraction $\eta$ represents the proportion of incoming water that freezes on the element. In particular, $\eta$ parameter depends on droplet size $\delta$, velocity ($V_\infty$), temperature ($T_\infty$) and Liquid Water Content (LWC) of the airflow, and sensing element diameter (D).

The water freezing rate can be evaluated, at the first order, following the relation:

$$\dot{m}_{freezing} = \eta \times E \times LWC \times V_\infty \times S$$

The water mass (m) that accretes on the sensing element during an interval time $\tau$ is given by:

$$m = \dot{m}_{freezing} \times \tau$$

In the case of presence of SLD in the flow (see U.S. Pat. Nos.6,269,320), and due to the small diameter of conventional sensing element, freezing fraction $\eta$ is significantly modified (important runback, pulverization of the droplet at impingement). Consequently, time required to accumulate the sufficient mass of ice to detect ice accretion is increased compared to smallest drops in the same condition. At the same time, due to the important size ratio between the droplet and the aircraft exposed parts (wings, engine intakes,...), local water freezing rates are not affected. Ice build up is then slower on the sensing element than on the aircraft critical parts. This results in a delayed information of ice accretion, which may affect aircraft control.

Consumption

Prior art ice detectors include a de-icing system, which generally consists of electrical heating cables disposed within the sensing element and within the strut.

After detection, both the strut and the sensing element are heated via the heating cables. It is effectively necessary to de-ice the detector in order to preserve the sensitivity of the system. Heating both the sensing element and the strut allows to get rid of the accumulated frost on both said sensing element and strut. A relevant measure can thus start again with all its accuracy.

However electric consumption is a particularly watched parameter on an aircraft and it is necessary to limit the average consumed power during a flight. Peaks of consumption are themselves relatively high, especially during certain critical phases of a flight such as takeoff and icing conditions. Thus devices generating important peaks of consumption are particularly critical during certain phases of a flight.

Conventional ice detectors are based on an architecture that comprises two levels of consumption. A first level of consumption corresponds to the normal flight conditions (electronic consumption) while a second level of consumption corresponds to the de-icing phases (after ice accretion is detected). Ice detectors have to be able to realize measures with a maximal occurrence. For this purpose, the power consumed during the de-icing phases in order to be able to realize a new measure rapidly is important. Such a device requires consequently an important peak of electric power during the de-icing phases.

**SUMMARY OF THE INVENTION**

For the above discussed purposes concerning an accurate detection of ice accretion, the invention proposes an ice detector for detecting ice accretion on the surface of a structure subject to icing, said ice detector comprising a sensing element protruding into the airflow and supported relatively to a surface of said object by a strut upon which it is mounted, characterized in that said sensing element has an evolutionary profile along the longitudinal axis adapted to the spectral distribution of the icing conditions. Said sensing element is adapted to the profile of ice distribution on the aircraft and allows detection on a large spectrum of droplet sizes. Advantageously, some parts of said sensing element are more sensitive to small droplets when others are adapted to large droplets.

In a preferred embodiment, said strut comprises a deflector to increase the local concentration of the droplets (improvement of collection Efficiency E of the sensing element) to provide a faster detection of ice accretion and to compensate evaporation effect on small droplets.

Said ice detector provides advantageously a signal indicating the severity of the icing conditions in which said structure is immersed. The severity of the icing conditions is determined by the speed at which ice accumulate through analysis of the slope of the variation of the sensing element oscillation frequency.

Finally, in accordance with the invention, power consumption during de-icing phases of the ice detector is advantageously reduced by using a first power supply dedicated to the strut and maintained during the whole duration of icing condition detection, and by using a second power supply to de-ice the sensing element.

## BRIEF DESCRIPTION OF THE DRAWINGS

Other characteristics, purposes and advantages of the invention will appear to the reading of the following detailed description, with respect to the annexed drawings, given as non restrictive examples, in which:

- Figure 1a, which has already been discussed above, represents a side view of a conventional ice detector extending perpendicularly to aircraft skin and with a constant cross section spanwise;
- Figure 1b, which has been discussed above, represents a front view, in the direction of the incident airflow, of the ice detector of figure 1a;
- Figure 1c, which has been discussed above, represents a top view of the ice detector of figure 1a;
- Figure 1d, which has been discussed above, represents a perspective view of the ice detector of figure 1a;
- Figure 2a, which has already been discussed above, represents a side view of a conventional ice detector sloped from vertical line in the direction of the flow, with constant cross section spanwise and oscillation axis perpendicular to longitudinal axis;
- Figure 2b, which has been discussed above, represents a front view, in the direction of the incident airflow, of the ice detector of figure 2a;
- Figure 2c, which has been discussed above, represents a top view of the ice detector of figure 2a;
- Figure 2d, which has been discussed above, represents a perspective view of the ice detector of figure 2a;
- Figure 3, which has already been discussed above, represents a side view of another prior art ice detector sloped from vertical line in the direction of the flow, with constant cross section spanwise;
- Figure 4 represents the concentration profile for two given sizes of droplets versus distance from aircraft skin for two flight conditions;
- Figure 5 represents Langmuir D distribution of droplet size (Median Volume Diameter MVD = 20μm) ;
- Figure 6 represents the operating principle of the ice detector of the invention;
- Figure 7a represents a sensing element with a circular cross section which evolutionary profile has a conical shape;
- Figure 7b represents a sensing element with a circular cross section which evolutionary profile is made of successive coaxial cylinders;
- Figure 7c is a top view of a sensing element with a an evolutionary profile which cross section is circular;
- Figure 7d is a top view of a sensing element with a an evolutionary profile which cross section is elliptic;
- Figure 7e is a top view of a sensing element with a an evolutionary profile which cross section is polygonal;
- Figure 8 represents the product of coefficient efficiency E by the freezing fraction η versus the ratio of the droplet diameter δ over the sensing element diameter D, for conventional sensing element and conical shape sensing element;
- Figure 9a represents measurement length of sensing element of figure 7a compared to conventional sensing element for a given flight condition;
- Figure 9b represents measurement length of sensing element of figure 7a compared to conventional sensing element for a different flight condition from 9a;
- Figure 10a represents a side view of a typical ice detector made according to the present invention using sensing element of figure 7a;
- Figure 10b represents a front view, in the direction of the incident airflow, of the ice detector of figure 10a;
- Figure 10c represents a top view of the ice detector of figure 10a;
- Figure 10d represents a perspective view of the ice detector of figure 10a;
- Figure 11a represents a side view of a typical ice detector made according to the present invention using sensing element of figure 7b;
- Figure 11b represents a front view, in the direction of the incident airflow, of the ice detector of figure 11a;
- Figure 11c represents a top view of the ice detector of figure 11a;
- Figure 11d represents a perspective view of the ice detector of figure 11a;
- Figure 12a represents a side view of a preferred embodiment for installation on aircraft areas with high boundary layer thickness;
- Figure 12b represents a front view, in the direction of the incident airflow, of the ice detector of figure 12a;

- Figure 12c represents a top view of the ice detector of figure 12a;
- Figure 12d represents a perspective view of the ice detector of figure 12a;
- Figure 13a represents a side view of a preferred embodiment for installation on aircraft areas with low boundary layer thickness;$
- Figure 13b represents a front view, in the direction of the incident airflow, of the ice detector of figure 13a;
- Figure 13c represents a top view of the ice detector of figure 13a;
- Figure 13d represents a perspective view of the ice detector of figure 13a;
- Figure 14a represents a rounded surface deflector implemented on the strut;
- Figure 14b represents a flat surface deflector implemented on the strut;
- Figure 15a illustrates the variation of the sensing element oscillation frequency and of its derivative according to time for different icing conditions;
- Figure 15b illustrates the influence of water freezing rate over detection time;
- Figure 15c represents absolute value of derivative of oscillation frequency versus water freezing rate;
- Figure 16a is a first electric circuitry diagram proposed for heating strut and sensing element;
- Figure 16b is a second electric circuitry diagram proposed for heating strut and sensing element;
- Figure 16c is a third electric circuitry diagram proposed for heating strut and sensing element.
- Figure 17 represents limitation of electrical consumption of the invention compared to prior art.

## DESCRIPTION OF THE PREFERRED EMBODIMENT

An ice detector comprises an intrusive oscillating probe, also called sensing element, mounted on a strut, said strut length depending on the measurement point required and boundary layer thickness, and a flange supported by aircraft mounting surface, said strut being fixed to said flange and a housing which extends into the interior of the aircraft. Said housing comprises various electronic cards and components used more particularly for sensing element oscillation frequency excitation and measurement, power supply management and EMI (ElectroMagnetic Interference)/EMC (ElectroMagnetic Compatibility) protection, and a connector for connecting said ice detector to aircraft control systems.

Operating principle

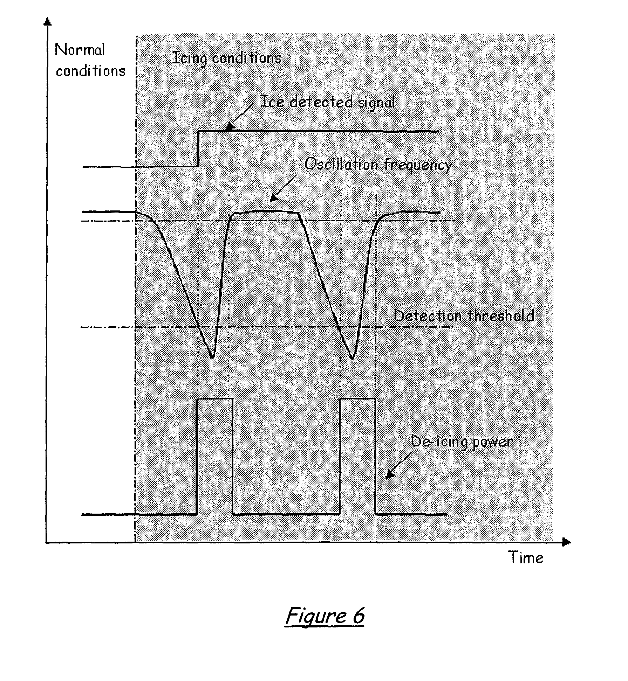

The ice detector is made of a mechanical vibratory system. The sensing element positioned in the airflow is vibrated to one of its mechanical resonance frequencies (compression mode) by the excitation portion of the circuitry. The compression mode is chosen not to be sensitive to airflow velocity, particles (sand, dust,...), rain and contaminants (fuel, oil,...). This oscillation frequency is chosen above 20000Hz not to be sensitive to aircraft vibration spectrum and is sufficiently energetic to sense ice accretion on the sensing element. As it is illustrated on figure 6, when ice comes to accumulate on said sensing element, mass of sensing element increases and consequently said oscillation frequency declines. The decline of the sensing element oscillation frequency depends on the mass of ice which deposits on said sensing element, which is a function of the Liquid Water Content (LWC) of the airflow, the Velocity of the droplets ($V_\infty$), the freezing fraction ($\eta$) and the collection Efficiency (E) of said sensing element. To prevent temperature influence on the ice detector performances, the material used to manufacture the sensing element has an elastic modulus that is constant in temperature.

The measurement portion of the circuitry detects any decline in oscillation frequency caused by ice accretion on the surface of the sensing element. When the deposit of ice is important enough for the decline of frequency to reach and exceed a fixed threshold, the ice detector sends a "Ice detected" signal to the icing protection system of the aircraft (figure 6).

The heating system ensures afterwards the de-icing of both sensing element and strut where ice has accumulated. Once ice is evacuated, the sensing element oscillation frequency returns to nominal value and the de-icing system is switched off. New ice accretion detection can thus begin. The "Ice detected" signal is maintained until no detection occurs during a predetermined duration (typically sixty seconds).

Adaptation to local airflow of sensing element profile

It is an objective of the invention to optimize the geometry of the sensing element according to the location on the aircraft and to icing conditions to be detected. Thus the measure is realized taking into account boundary layer thickness, profile of Liquid Water Content (LWC) distribution and spectrum of droplet size along the distance to the aircraft skin.

As it has already been stated above, the concentration of drops evolves with the distance to the aircraft skin according to the size of the drops. Figure 4 illustrates typical concentration profiles for two given sizes of drops and two flight conditions (Velocity, Temperature, Altitude,...), at the same location on the aircraft. Considering flight condition 1, for a first given size of drops (curve $\delta_1$), the concentration is maximal at a distance $d_1$ from the aircraft skin whereas, for a second given size of drops (curve $\delta_2$), the concentration is maximal at a distance $d_2$ from the aircraft skin. As shown on flight condition 2, distances $d_1$ and $d_2$ are modified to respectively $d'_1$ and $d'_2$ due to modification of the flow.

Conventional ice detectors are classically constituted of a cylindrical sensing element with constant circular section. Dimensions of said sensing element result from a compromise between sensitivity to ice accretion, value of oscillation frequency, mechanical resistance, sensitivity to environmental conditions (airflow velocity, aircraft vibrations, particles,...). In consequence, due to constant circular cross section spanwise, the sensing element length is relatively short (around 20mm) to preserve a sufficient rigidity. In this configuration, the measurement point is defined according to the maximal concentration average distance and said sensing element is positioned, thanks to strut length, at the distance required. The measure is thus adapted for medium droplet size.

The invention proposes to improve ice detection in terms of distance range of measurement and spectrum of droplet sizes by using a sensing element that is characterized by an evolutionary profile.

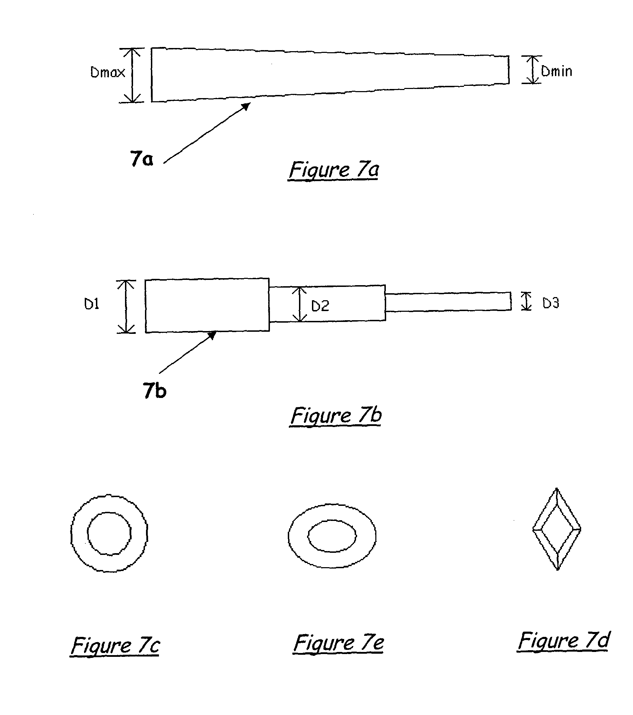

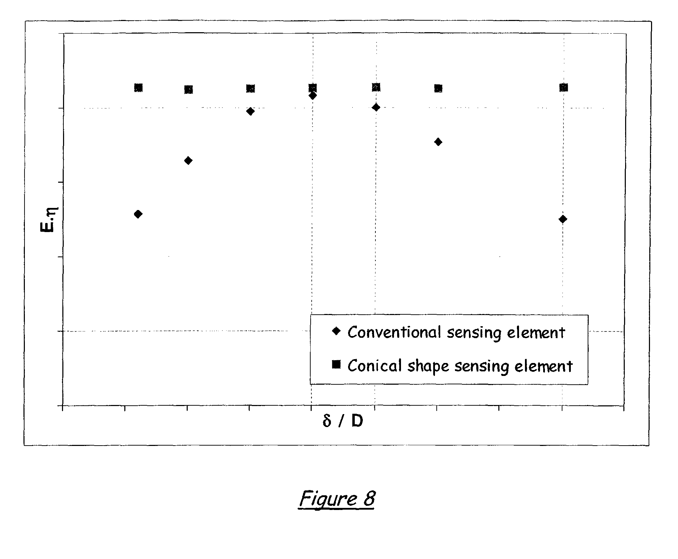

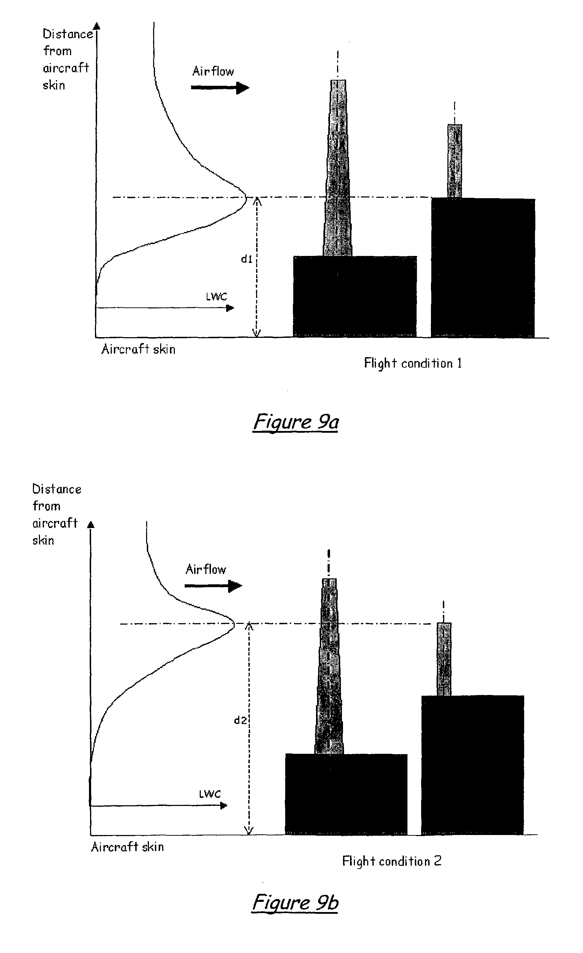

Figures 7a, 7b, 7c, 7d and 7e show views of a sensing element with different evolutionary profiles. Said sensing element extends on a substantial length, generally ranging between 45 to 65 millimeters.

Figure 7a shows a sensing element 7a, which has a substantially conical shape. Thus, the sensing element circular cross section (figure 7a) presents a diameter that decreases continuously with the increase of the distance to the aircraft skin. The base of said sensing element 7a has the largest diameter $D_{Max}$ while tip of said sensing element 7a has the smallest diameter $D_{min}$. Diameter $D_{Max}$ is about 10 millimeters while diameter $D_{min}$ is about 2 millimeters.

As stated before, ice accretion on the sensing element is, in particular, characterized by collection efficiency E and freezing fraction η. Classically, at fixed flight conditions, E parameter is proportional to droplet diameter δ and inversely proportional to sensing element diameter

$$\text{D:} \quad E = function\!\left(\delta \,,\, \frac{1}{D}\right).$$

Consequently, at fixed droplet diameter δ, E parameter decreases from tip to base of conical sensing element. At a fixed point of sensing element, E parameter increases with droplet diameter δ.

η parameter is typically proportional to sensing element diameter D and inversely proportional to droplet diameter

$$\delta\text{:} \quad \eta = function\!\left(D \,,\, \frac{1}{\delta}\right).$$

Thus, at fixed droplet diameter δ, η parameter increases from tip to base of the conical sensing element. At a fixed point of the sensing element, η parameter decreases with droplet diameter δ.

Consequently, at fixed flight conditions, value of E×η is conserved along longitudinal axis for a sensing element with conical shape. Considering conventional sensing elements, value of E×η is not conserved along longitudinal axis due to constant diameter. This is illustrated on figure 8: for the median ratio of the droplet diameter δ over the sensing element diameter D, E×η value is the same for both sensing elements. Considering δ/D ratios inferior to median value, E×η value of conventional sensing element decreases whereas E×η value of sensing element of the invention is conserved. The same effect is observed for δ/D ratios superior to median value. Consequently, accuracy of ice accretion detection is conserved whatever the droplet diameter for an ice detector of the invention contrary to conventional ice detectors.

As stated herein, different accumulation zones are defined along said sensing element 7a, the transition between said accumulation zones being continuous. On classical installation areas on aircraft, maximum concentration of large droplets is met close to aircraft skin whereas maximum concentration of small droplets is met further from aircraft skin. Thus, large droplets tend to accumulate on a portion of said sensing element 7a which has a large diameter while small drops tend to accumulate on a portion of said sensing element 7a which has a small diameter. Or, as it has already been demonstrated above, E×η value is maximum at the tip of said sensing element considering small droplets and E×η value is maximum at the base of said sensing element considering large droplets. Therefore, ice accretion is optimal along longitudinal axis and thus the measurement integrates advantageously the whole distribution of water droplets present in the airflow.

Another advantage of the conical shape is to obtain a longer sensing element than conventional sensing element (length ratio ranging between 2 to 3) while preserving an oscillation frequency above 20000Hz and the sensitivity to ice accretion. At the same time, insensitivity to environmental conditions (such as aircraft vibration, sand and airflow velocity) is preserved. Consequently, the measurement length can be adapted to the whole local icing conditions in terms of droplet size and flight conditions. This is illustrated on figure 9a and figure 9b for two flight conditions. On said conventional ice detector, due to the limited measurement length, only a fraction of the local maximum of concentration is recovered by the sensing element if said maximum of concentration is not centered on the sensing element. Considering the ice detector of the invention, a maximum of local concentration is recovered by the sensing element whatever the flight condition. Consequently, the accuracy of the ice detector of the invention is conserved on the flight envelope.

Figure 7b presents a sensing element 7b that is substantially constituted by different successive coaxial cylinders, diameters of said cylinders decreasing with the increase of the distance from aircraft skin. Thus, the sensing element circular cross section has a diameter that decreases discontinuously with the increase of the distance from the aircraft skin. The sensing element 7b represented on figure 7b is made of three cylindrical portions. A first cylindrical portion, positioned at the base of said sensing element 7b, has the largest diameter $D_1$. A second cylindrical portion prolongs said sensing element 7b and presents a diameter $D_2$ smaller than $D_1$. A third cylindrical portion prolongs said sensing element 7b and constitutes said sensing element tip portion. The diameter of said third cylindrical portion $D_3$ is smaller than $D_2$ and hence than $D_1$. Diameter $D_1$ is about 10 millimeters while diameter $D_2$ is about 6 millimeters and diameter $D_3$ about 2 millimeters. Said three cylindrical portions define three different ice accumulation zones onto said sensing element 7b. Schematically, the first cylindrical portion (diameter $D_1$) is adapted for the accumulation of large drops, the second cylindrical portion (diameter $D_2 < D_1$) is adapted for the accumulation of medium sized drops and the third cylindrical portion (diameter $D_3 < D_2 < D_1$) is adapted for the accumulation of small drops. As for the conical sensing element 7a illustrated on figure 7a, said sensing element 7b shape allows obtaining a longer sensing element than a conventional sensing element. Number of coaxial cylinders, as presented herein, is non-restrictive and can be advantageously adapted as it is exposed hereafter.

A particular advantage of said sensing element made of coaxial cylinders, is to have a dedicated oscillation frequency for each cylinder. This allows determining the diameter of droplets that strike the sensing element. Indeed, as stated before, $E \times \eta$ value of a cylinder characterized by its diameter D is maximum for a given droplet diameter $\delta$, at fixed flight conditions. Using coaxial cylinders with different diameters, it is possible to segregate the spectrum droplet diameter $\delta$ in dedicated intervals. For example, on sensing element of figure 7b, diameter $D_1$ is dedicated to detect accretion of droplets characterized by a diameter comprised in an interval centered on diameter $\delta_1$, diameter $D_2$ is dedicated to detect accretion of droplets characterized by a diameter comprised in an interval centered on diameter $\delta_2$ and diameter $D_3$ is dedicated to detect accretion of droplets characterized by a diameter comprised in an interval centered on diameter $\delta_3$.

As specified before, number of coaxial cylinders is non-restrictive and precision of droplet diameter is increased by using a more important number of coaxial cylinders. The knowledge of the main diameter of droplets is a major advantage concerning ice protection systems of the aircraft. Indeed, when only small droplets are encountered, it is not necessary to switch on the ice protection system immediately because of slow or no accretion on aircraft parts. Conversely, Super Large Droplets need to be detected to provide an efficient deicing of the aircraft part subject to icing. Consequently, the ice detector of the invention improves flight safety.

Taking into account the installation area and flight condition, the proportion of Liquid Water Content of each size can be measured with an appropriate treatment.

According to the measuring principles describe herein, the cross section of the sensing element of the invention is not necessary circular. As it is illustrated on figure 7d and 7e, the cross section of the sensing element may have also a polygonal or elliptic shape.

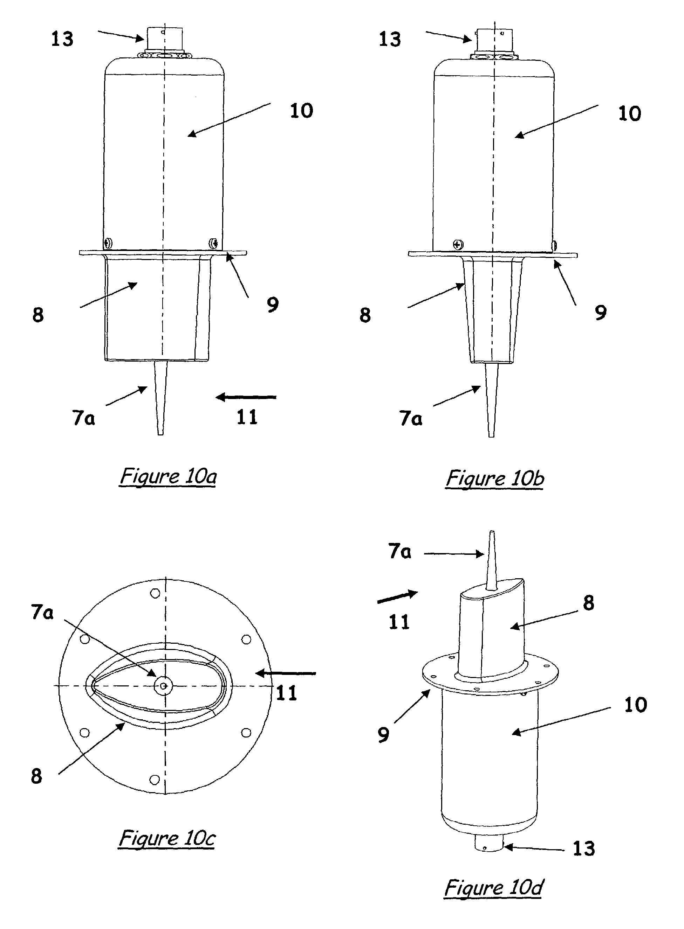

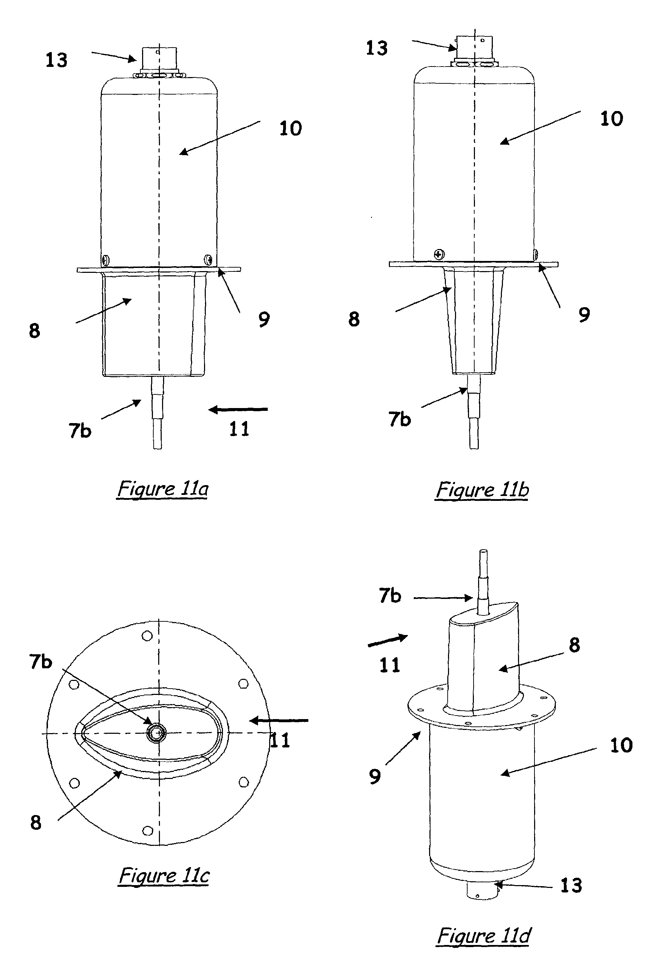

In a classical assembly type (figure 10a to figure 11d), the sensing element with an evolutionary profile (7a, 7b) is mounted on a strut, which length is adapted to boundary layer thickness at the installation point, perpendicularly to aircraft skin and flow direction.

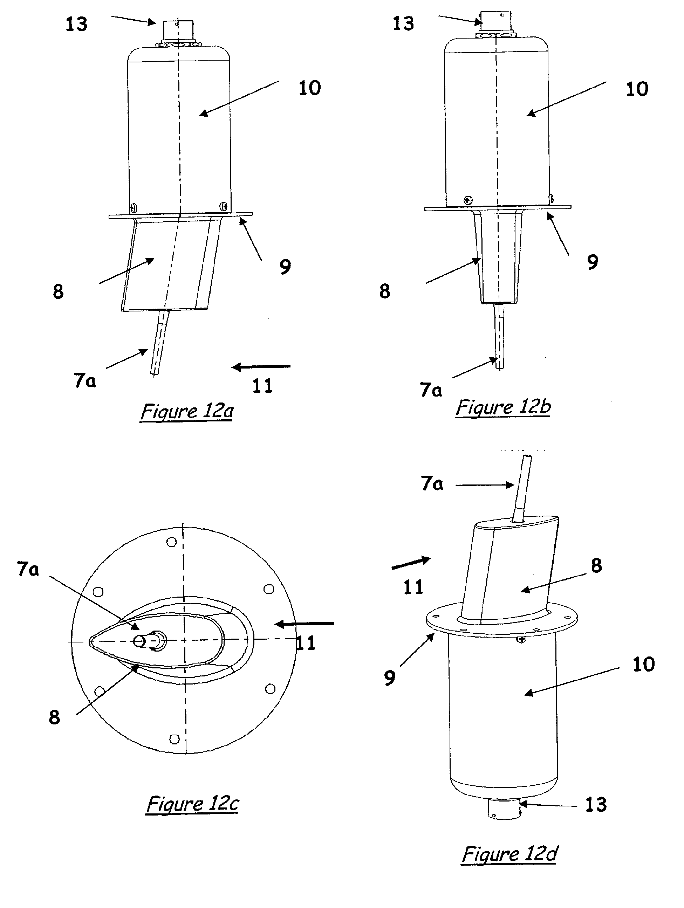

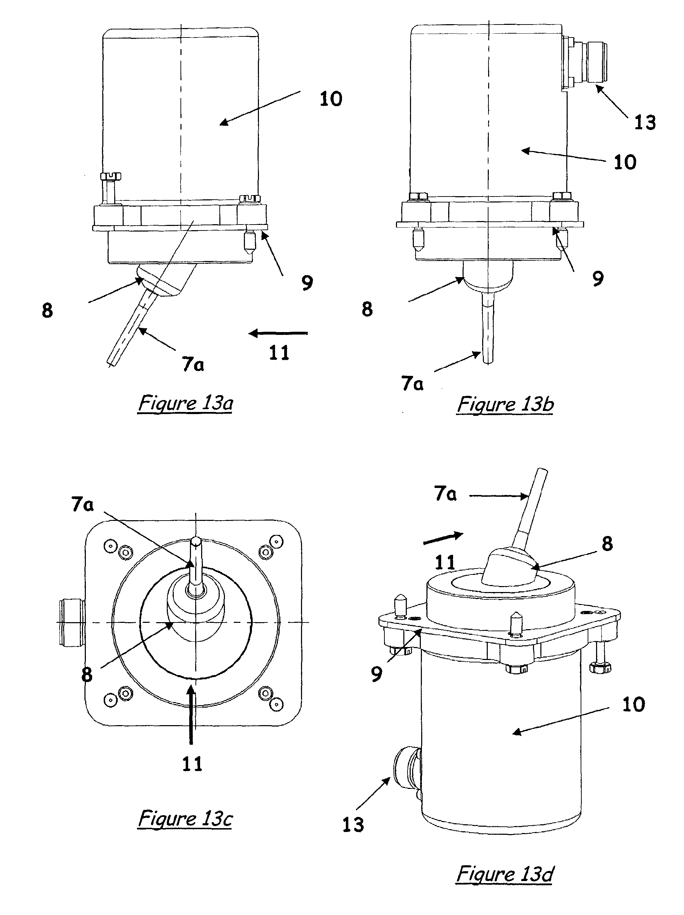

Figures 12a to 13d illustrate a preferred embodiment wherein said sensing element is sloped from the vertical line relative to the aircraft skin in the direction of the airflow to optimize detection of small droplets. Indeed, as it has been stated above, said small droplets are particularly sensitive to evaporation due to conversion of kinetic energy to temperature at impact point. Due to evolutionary profile and slope of the sensing element, a longitudinal velocity component appears and allows reducing conversion of kinetic energy into temperature. As temperature of small droplets is lower, evaporation is limited and thus detection is more accurate. Advantageously, the slope of the sensing element allows increasing the accretion area compared to the projected surface. Consequently, ice build up is facilitated on the sensing element. Said slope is generally included between 5° and 35°.

As a conclusion, the ice detectors of the invention offer a number of parameters such as strut length, sensing element profile, diameter and length, slope angle which can be advantageously customized to provide an accurate detection of ice accretion, taking into account aircraft type, installation area and icing conditions encountered.

Increase of local concentration on sensing element by adjunction of a deflector on the strut

Conventional struts have an airfoil shape, which reduces the drag of the ice detector. The face adjacent to the sensing element is classically perpendicular to the strut axis, i.e. parallel to airflow direction. This conventional embodiment does not influence the local concentration of droplets that strike the sensing element. The invention proposes the implementation of a deflector on the strut of the ice detector to increase local concentration of droplets that deposit on the sensing element, advantageously concerning small droplets. This allows improving the collection Efficiency E of the sensing element that results in a faster detection of ice accretion.

Said deflector is oriented so that streamlines are locally deflected in the direction of the sensing element. Therefore, droplets that should have struck the strut on conventional ice detectors are guided towards the sensing element. The efficiency of the deflector depends on the momentum of supercooled water droplets.

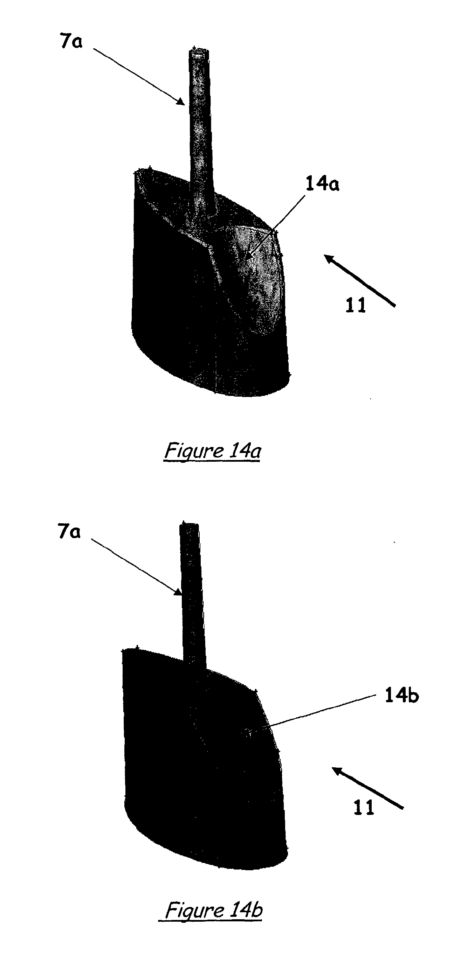

Figures 14a and 14b illustrate respectively such an integration of a deflector 14a, 14b on a strut upon which a sensing element is mounted. The strut has a classical airfoil or elliptical shape. Figure 14a represents a strut upon which a rounded concave surface deflector 14a is set up, the roundness of said deflector 14a being steered inward said strut. Figure 14b represents a strut upon which a flat surface deflector 14b is set up.

Following the type of deflector used on said strut, increase of droplet concentration is up to 20% for small droplets and 5% for large droplets. Advantageously, and particularly concerning small droplets, evaporation effect is significantly reduced at the impact point of the sensing element due to increase of water mass flow.

Analysis of severity of ice accretion

On conventional ice detectors, severity of ice accretion is classically given by counting the number of successive detection cycles during a predetermined time.

The speed at which ice accretion occurs is a particularly relevant information characterizing the severity of the icing conditions. As it has already been stated above, when ice builds up on the sensing element, said sensing element oscillation frequency declines. The invention proposes to use the variation of the sensing element oscillation frequency during a given time to indicate the severity of the icing conditions.

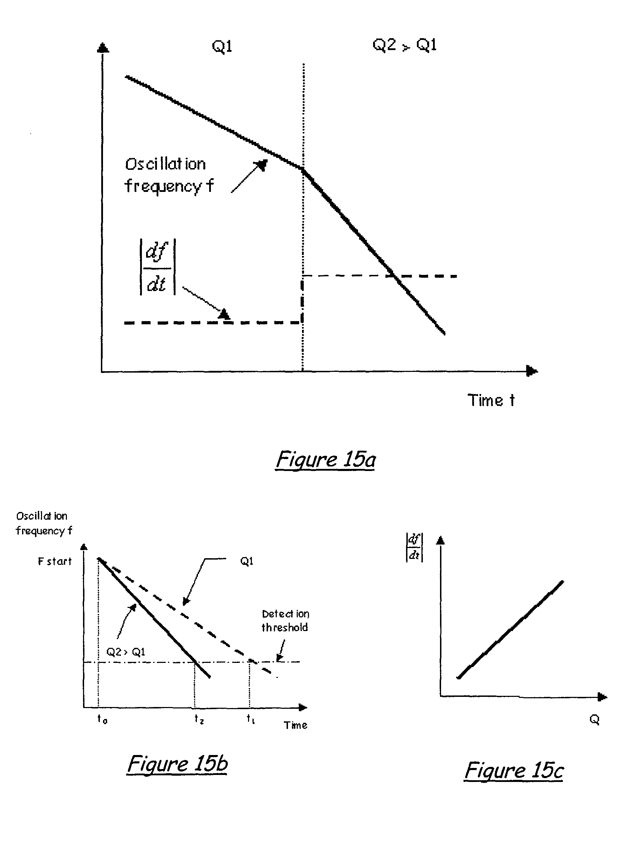

Figure 15a and 15b represent variations versus time of the sensing element oscillation frequency f for two water freezing rates $Q_1$ and $Q_2$, said water freezing rate $Q_2$ being more important than said water freezing rate $Q_1$. Considering figure 15b, at to sensing element oscillation frequency is equal to nominal oscillation frequency $f_{start}$. Time $t_1$ (respectively $t_2$) is the time at which oscillation frequency is equal to detection threshold for condition $Q_1$ (respectively $Q_2$). As $Q_2$ is superior to $Q_1$, $t_2$ is inferior to $t_1$, due to faster accretion on the sensing element.

Therefore, by analyzing the variation of the sensing element oscillation frequency f during a given time, it is possible to obtain the mass of ice that deposits by unit of time on said sensing element and consequently on the other parts of the aircraft which are exposed to the airflow.

As it has already been stated before, the water freezing rate Q can be evaluated, at the first order, following the relation:

$$Q = \eta \times E \times LWC \times V_\infty \times S,$$

where E is the collection Efficiency of the sensing element;

$\eta$ is the freezing fraction;

S is the reference surface ($m^2$);

LWC is the Liquid Water Content ($kg/m^3$);

$V_\infty$ is the upstream velocity of airflow (m/s).

Oscillation frequency f(t) of the sensing element can be expressed as a function of the sensing element mass m(t) as follows :

$$f(t) = \frac{A}{\sqrt{m(t)}}$$

A is a constant depending on the material and the geometry.

The derivative versus time t of oscillation frequency f is given by:

$$\frac{df(t)}{dt} = -\frac{A}{2 \times m(t) \times \sqrt{m(t)}} \times \frac{dm(t)}{dt}$$

Mass m(t) of sensing element at time t is :

$$m(t) = m_0 + m_{ice}(t)$$

$m_0$ is the mass of sensing element free of ice;

$m_{ice}(t)$ is the mass of ice accumulated on said sensing element ($\frac{dm_{ice}(t)}{dt} = Q$).

Assuming that $m_{ice}(t)$ is negligible compared to $m_0$, the derivative of oscillation frequency f is finally given by:

$$\frac{df(t)}{dt} = -\frac{A}{2 \times m_0 \times \sqrt{m_0}} \times Q = -\frac{f_0}{2 \times m_0} \times Q$$

where $f_0$ is the oscillation frequency of the sensing element free of ice.

Figure 15c represents variations of the absolute value of derivative $\frac{df}{dt}$ in function of Q: a large derivative value indicates a large value of water freezing rate Q and consequently a severe icing condition that corresponds to a quick ice accretion on the aircraft exposed parts.

Thus, the ice detector of the invention provides information of severity of icing conditions, obtained from analysis of the slope of the curve representing temporal variations of said sensing element oscillation frequency, to aircraft protection systems for a more efficient prevention of ice accretion.

Utilizing the sensing element made of coaxial cylinders described herein, the severity of the icing conditions can be correlated to the droplet size to provide an accurate characterization of the icing environment.

Optimization of de-icing system consumption

Classically, once ice accretion has been detected by the ice detector, it is necessary to de-ice said ice detector before starting a new measurement cycle. Due to important thermal inertia of the strut and the sensing element, an important electrical power is required to de-ice the ice detector in a reduced time. According to prior art, the operating principle of the de-icing device is binary, i.e. power is maintained at a maximum value (classically 260W) during the de-icing phase and to a minimum value during the remainder of the time (<10W).

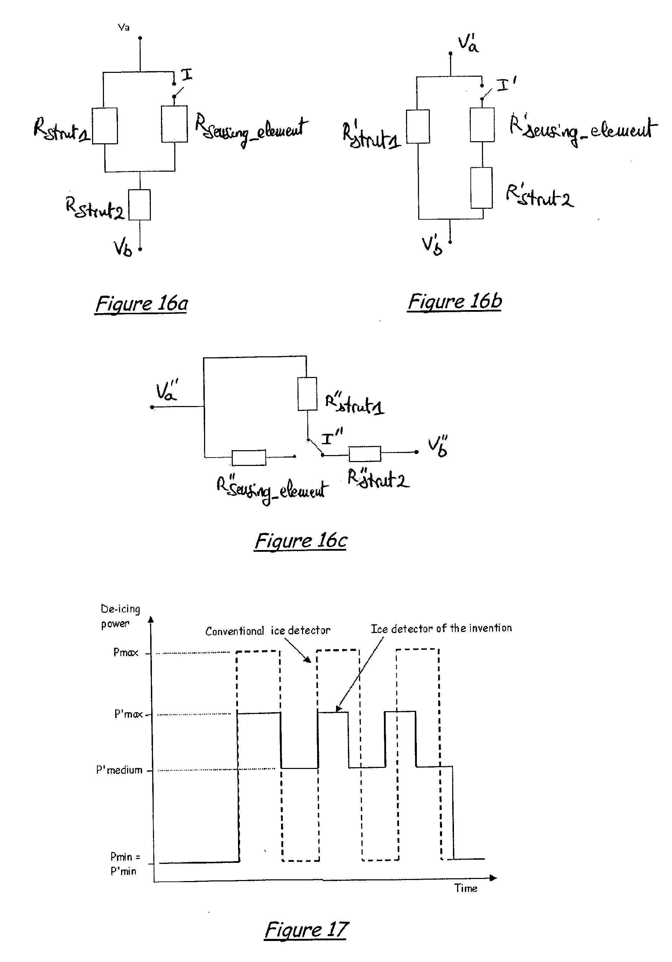

It is another objective of the invention to limit the power consumption of the ice detector during said de-icing phases by using a double de-icing command. After first detection, both strut and sensing element are de-iced via electrical heaters. When the oscillation frequency returns to nominal value, said sensing element heater is powered off whereas strut heater remains powered on. Consequently, the strut is protected from ice accretion (anti-icing mode) while ice accretion on the sensing element is detected. Supply to the strut is then stopped at the end of the alarm signal. Advantageously, the power required to avoid ice accretion is inferior to the power needed to remove the ice cap on the strut. Therefore, peaks of consumption of an ice detector of the invention are inferior to those generated by conventional ice detectors. Power consumption can be segregated in three distinct phases as it is illustrated on figure 17): minimum power $P_{min}$ (<10W) when no detection occurs, maximum power $P'_{max}$ (about 200W) during de-icing phases of the sensing element and medium power $P'_{medium}$ (about 130W) during ice accretion on the sensing element (after first detection). Advantageously, as the strut does not require being de-iced, the interval time between two consecutive detection phases of ice accretion is significantly reduced to a minimum, thus improving the accuracy of said ice detector.

In a first embodiment, this de-icing and anti-icing system is realized by using two independent electrical circuits (heater with specific power supply), one dedicated to the strut and the other one to the sensing element, each circuit being supplied by on board electrical voltage (28Vdc or 115Vac/400Hz).

In other embodiments, the invention advantageously proposes to realize this function by using only one electrical circuitry represented by the electrical diagram of figure 16a, figure 16b or figure 16c.

Figure 16a represents an electric diagram comprising three resistances. Two resistances $R_{sensing\_element}$ and $R_{strut1}$, mounted in parallel, are serially connected with a third resistance $R_{strut2}$ between the potentials $V_a$ and $V_b$ of the power supply. Resistance $R_{sensing\_element}$ allows de-icing the sensing element whereas resistances $R_{strut1}$ and $R_{strut2}$ allow de-icing the strut. A switch I is disposed on the branch of the parallel circuitry which comprises said resistance $R_{sensing\_element}$. As stated above, maximum power consumption (de-icing of sensing element) is obtained when said switch I is closed, medium power consumption is obtained when said switch I is open and minimum power consumption when system is not supplied.

Figure 16b represents a variant of electrical circuitry described herein. A resistance $R'_{strut1}$ is mounted in parallel with two serially connected resistances $R'_{sensing\_element}$ and $R'_{strut2}$ between the potentials $V'_a$ and $V'_b$ of the power supply. A switch I' is disposed on the branch of the parallel circuitry which comprises said resistances $R'_{sensing\_element}$ and $R'_{strut2}$. When I' is closed, said ice detector is at the maximum rated power and when I' is open medium power consumption is obtained.

Figure 16c represents another variant of electrical circuitry described herein. A resistance $R''_{strut2}$ is either serially connected with a resistance $R''_{sensing\_element}$ or serially connected with a resistance $R''_{strut1}$ between the potentials $V''_a$ and $V''_b$ of the power supply. The serial connection of said resistance $R''_{strut2}$ with either said resistance $R''_{sensing\_element}$ or said resistance $R''_{strut1}$ is realized thanks to a switch I''. When I'' is pointed to $R''_{sensing\_element}$, said ice detector is at the maximum rated power and when I'' is pointed to $R''_{strut1}$, medium power consumption is obtained.

Considering all the electrical circuits described herein, a complementary electrical resistance is used in the strut to limit power consumption between two de-icing phases of the sensing element.

## Claims

1. An ice detector for detecting ice accretion on a surface of a structure subject to icing, said ice detector comprising a sensing element protruding into the airflow and supported relatively to a surface of said structure by a strut upon which it is mounted, **characterized in that** said sensing element has an evolutionary profile, with a cross-section varying along the longitudinal axis of said sensing element, adapted to enlarge the measurement range of icing conditions, in particular in terms of droplet size spectrum and measurement length.

2. The ice detector of claim 1 further **characterized in that** said sensing element has a circular or elliptic cross-section.

3. The ice detector of claim 1 further **characterized in that** said sensing element has a polygonal cross-section.

4. The ice detector of claim 2 or 3 further **characterized in that** the characteristic dimension of the sensing element cross-section decreases continuously as the distance from said structure subject to icing increases.

5. The ice detector of claims 2, 3 or 4 further **charac-**

**terized in that** said sensing element has a substantially conical shape.

6. The ice detector of claim 2 or 3 further **characterized in that** the characteristic dimension of the sensing element cross-section decreases discontinuously as the distance from said structure subject to icing increases.

7. The ice detector of claim 2, 3 or 6 further **characterized in that** said sensing element is constituted by successive coaxial cylinders adapted to identify the icing conditions encountered, particularly in terms of droplet size and concentration.

8. The ice detector of any of the preceding claims further **characterized in that** said sensing element is sloped, in the direction of the airflow, from the orthogonal axis of the surface upon which said ice detector is mounted.

9. An ice detector for detecting ice accretion on a surface of a structure subject to icing, said ice detector comprising a sensing element protruding into the airflow and supported relatively to a surface of said structure by a strut upon which it is mounted, **characterized in that** said strut comprises a deflector installed in front of said sensing element and adapted to increase the quantity of water droplets that accretes on said sensing element by locally deflecting the streamlines towards this one.

10. The ice detector of claim 9, further **characterized in that** said deflector is a flat surface on the strut sloped from airflow direction toward said sensing element.

11. The ice detector of claim 9, further **characterized in that** said deflector is a rounded concave surface on the strut sloped from airflow direction toward said sensing element.

12. An ice detector for detecting ice accretion on a surface of a structure subject to icing, said ice detector comprising a sensing element protruding into the airflow and supported relatively to a surface of said structure by a strut upon which it is mounted, **characterized in that** said ice detector provides a signal indicating the severity of the icing conditions determined by the speed at which ice accretes on said sensing element trough the analysis of the slope of the curve representing the decline of the sensing element oscillation frequency over time.

13. An ice detector for detecting ice accretion on a surface of a structure subject to icing and providing an alarm signal when a substantial ice accretion is detected, said ice detector comprising a sensing element protruding into the airflow and supported relatively to a surface of said structure by a strut upon which it is mounted, said sensing element and said strut being de-iced after the detection of a substantial ice accretion, **characterized in that** the de-icing of said sensing element is maintained until said sensing element is free of ice whereas the de-icing of said strut is maintained during the whole duration of said alarm signal.

14. The ice detector of claim 13 further **characterized in that** a first power supply is dedicated specifically to the de-icing of said strut and a second power supply is dedicated specifically to the de-icing of said sensing element.

15. The ice detector of claim 13 further **characterized in that** a power supply is dedicated to the de-icing of both said strut and sensing element, a switch allowing heating of either both said strut and sensing element or only said strut.

Figure 1a

Figure 1b

Figure 1c

Figure 1d

13

12

10

8

9

11

7

_Figure 2a_

13

12

10

8

9

7

_Figure 2b_

7

8

11

9

_Figure 2c_

7

11

12

8

10

9

13

_Figure 2d_

*Figure 3*

Figure 4

Figure 5

*Figure 6*

*Figure 7a*

*Figure 7b*

*Figure 7c*

*Figure 7e*

*Figure 7d*

*Figure 8*

Figure 9a

Figure 9b

Figure 10a

Figure 10b

Figure 10c

Figure 10d

Figure 11a

Figure 11b

Figure 11c

Figure 11d

*Figure 12a*

*Figure 12b*

*Figure 12c*

*Figure 12d*

_Figure 13a_

_Figure 13b_

_Figure 13c_

_Figure 13d_

7a

14a

11

_Figure 14a_

7a

14b

11

_Figure 14b_

Q1    Q2 ˃ Q1

Oscillation
frequency f

$$\left|\frac{df}{dt}\right|$$

Time t

*Figure 15a*

Oscillation
frequency f

F start

Q1

Detection
threshold

Q2 ˃ Q1

t₀    t_z    t_l    Time

*Figure 15b*

$$\left|\frac{df}{dt}\right|$$

Q

*Figure 15c*

_Figure 16a_

_Figure 16b_

_Figure 16c_

_Figure 17_

| | | European Patent Office | EUROPEAN SEARCH REPORT | Application Number<br>EP 03 29 0582 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (Int.Cl.7) |
|---|---|---|---|
| X | US 2 766 619 A (MOYLE MORTON P ET AL)<br>16 October 1956 (1956-10-16)<br>* column 1, line 68 - column 2, line 13;<br>figures *<br>--- | 1,2,5 | B64D15/20<br>G08B19/02 |
| D,A | US 6 320 511 B1 (OWENS DAVID G ET AL)<br>20 November 2001 (2001-11-20)<br>* the whole document *<br>--- | 1-8 | |
| A | EP 1 254 833 A (ROSEMOUNT AEROSPACE INC)<br>6 November 2002 (2002-11-06)<br>* the whole document * | 1-8 | |
| X | * column 8, line 53 - column 9, line 13;<br>figures 4,5 *<br>* column 12, line 31-46 * | 9-11 | |
| X | * column 4, line 39-45 *<br>* column 6, line 30-44 *<br>--- | 12 | |
| X | WO 03 002410 A (ROSEMOUNT AEROSPACE INC)<br>9 January 2003 (2003-01-09)<br>* page 10, line 11 - page 11, line 18 *<br>* page 14, line 10-19 *<br>* page 17, line 1-6 *<br>* page 20, line 27 - page 21, line 1;<br>figures * | 9-11 | |
| X | * page 10, line 11 - page 11, line 18 *<br>* page 16, line 13-19 *<br>* page 17, line 24-28 *<br>--- | 13 | TECHNICAL FIELDS<br>SEARCHED (Int.Cl.7)<br><br>B64D<br>G08B |
| X | US 3 341 835 A (WERNER FRANK D ET AL)<br>12 September 1967 (1967-09-12)<br>* column 1, line 48-56 *<br>* column 7, line 22-32,48-58 *<br>* column 7, line 74 - column 8, line 5;<br>figures *<br>---<br><br>-/-- | 12 | |

The present search report has been drawn up for all claims

| Place of search | Date of completion of the search | Examiner |
|---|---|---|
| MUNICH | 15 October 2003 | Salentiny, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

## EUROPEAN SEARCH REPORT

**Application Number**

EP 03 29 0582

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 553 137 A (KOWLES JOHN W ET AL) 12 November 1985 (1985-11-12) * column 2, line 44 – column 3, line 6; figures * | 12 | |
| X | US 3 621 714 A (PUCCINELLI ALFRED R) 23 November 1971 (1971-11-23) | 13 | |
| A | * column 3, line 1-34; figures * | 14,15 | |
| X | GB 840 068 A (ARMCO INC) 6 July 1960 (1960-07-06) * page 2, line 121-128 * * page 3, line 74-103,119-128; figures * | 13,15 | |
| X | US 3 940 622 A (STALLABRASS JAMES R ET AL) 24 February 1976 (1976-02-24) * column 3, line 22-46 * * column 5, line 55 – column 6, line 3; figures * | 13,14 | |

**TECHNICAL FIELDS SEARCHED (Int.Cl.7)**

The present search report has been drawn up for all claims

| Place of search | Date of completion of the search | Examiner |
|---|---|---|
| MUNICH | 15 October 2003 | Salentiny, G |

EPO FORM 1503 03.82 (P04C01)

European Patent
Office

**Application Number**

EP 03 29 0582

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent
Office

**LACK OF UNITY OF INVENTION
SHEET B**

Application Number

EP 03 29 0582

The Search Division considers that the present European patent application does not comply with the
requirements of unity of invention and relates to several inventions or groups of inventions, namely:

1. Claims: 1-8

    An ice detector comprising a sensing element having a
    profile particularly adapted to an enlarged measurement
    range of the spectral distribution of the icing conditions.

2. Claims: 9-11

    An ice detector comprising a sensing element and a deflector
    to increase the local concentration of the droplets and
    thereby the collection efficiency of the sensing element.

3. Claim : 12

    An ice detector comprising a system for indicating the
    severity of the icing conditions through the analysis of the
    oscillation frequency curve experienced by the sensing
    element.

4. Claims: 13-15

    An ice detector comprising a system with reduced power
    consumption for de-icing the sensing element and the strut
    on which the sensing element is mounted.

EP 1 396 425 A1

## ANNEX TO THE EUROPEAN SEARCH REPORT
## ON EUROPEAN PATENT APPLICATION NO.

EP 03 29 0582

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2003

| Patent document cited in search report | | Publication date | Patent family member(s) | | Publication date |
|---|---|---|---|---|---|
| US 2766619 | A | 16-10-1956 | NONE | | |
| US 6320511 | B1 | 20-11-2001 | FR | 2817236 A1 | 31-05-2002 |
| EP 1254833 | A | 06-11-2002 | US | 2002158768 A1 | 31-10-2002 |
| | | | EP | 1254833 A1 | 06-11-2002 |
| WO 03002410 | A | 09-01-2003 | WO | 03002410 A1 | 09-01-2003 |
| US 3341835 | A | 12-09-1967 | DE | 1573295 A1 | 09-04-1970 |
| | | | GB | 1087475 A | 18-10-1967 |
| US 4553137 | A | 12-11-1985 | NONE | | |
| US 3621714 | A | 23-11-1971 | GB | 1260089 A | 12-01-1972 |
| GB 840068 | A | 06-07-1960 | NONE | | |
| US 3940622 | A | 24-02-1976 | CA | 971652 A1 | 22-07-1975 |
| | | | DE | 2353105 A1 | 02-05-1974 |
| | | | DK | 151544 B | 14-12-1987 |
| | | | FR | 2204301 A5 | 17-05-1974 |
| | | | GB | 1406957 A | 17-09-1975 |
| | | | IT | 996874 B | 10-12-1975 |
| | | | JP | 996479 C | 30-04-1980 |
| | | | JP | 49134386 A | 24-12-1974 |
| | | | JP | 54029915 B | 27-09-1979 |
| | | | NO | 136568 B | 20-06-1977 |
| | | | SE | 394526 B | 27-06-1977 |
| | | | SU | 572195 A3 | 05-09-1977 |

EPO FORM P0459

For more details about this annex : see Official Journal of the European Patent Office, No. 12/82

30